# EUROPÄISCHE PATENTSCHRIFT

(11) **EP 1 473 200 B1**
(45) Veröffentlichungstag und Bekanntmachung des Hinweises auf die Patenterteilung: **06.09.2006**
(21) Anmeldenummer: 04009611.7
(22) Anmeldetag: 22.04.2004
(51) Int. Cl.: B60R 21/20

(54) **Gassack-Modul**
Airbag module
Module de coussin gonflable

(30) Priorität: 02.05.2003 DE 20306818 U
(43) Veröffentlichungstag der Anmeldung: 03.11.2004
(73) Patentinhaber: TRW Automotive GmbH, 73553 Alfdorf (DE)
(72) Erfinder: Dannenhauer, Reiner, 73642 Welzheim (DE); Schultz, Dirk, 73540 Heubach (DE); Lang, Norbert, 73575 Leinzell (DE); Mangold, Rolf, 73577 Ruppertshofen (DE)
(74) Vertreter: Sties, Jochen

(56) Entgegenhaltungen:
- EP-A- 1 396 396
- DE-A- 4 102 615
- DE-B- 10 240 640
- DE-U- 9 013 131
- US-A- 5 294 414
- US-A- 5 762 368

## Beschreibung

Die Erfindung betrifft ein Gassack-Modul und insbesondere ein Gassack-Modul für einen Beifahrer eines Fahrzeugs.

Übliche Gassack-Module haben einen allgemein zylindrischen Gasgenerator, mindestens einen Zünder und ein Gehäuse, an dem der Gasgenerator befestigt ist. Ein solches Gassack-Modul soll einen minimalen Bauraum erfordern und ein geringes Gewicht aufweisen. Außerdem soll es einen einfachen Aufbau haben, um mit geringen Kosten hergestellt werden zu können. Schließlich sollen geringe Leckage-Verluste beim Aufblasen des Gassacks auftreten, um einen möglichst hohen Wirkungsgrad zu erzielen.

Die Aufgabe der Erfindung besteht darin, ein kostengünstiges Gassack-Modul der eingangs genannten Art zu schaffen, welches die genannten Anforderungen erfüllt.

Dokument EP 1396396 A1 ist ein Dokument gemäß Artikel 54(3) EPÜ und offenbart ein Gassack-Modul mit einem zylindrischen Gasgenerator, mindestens einem Zünder und einer Halteplatte, an der der Gasgenerator befestigt ist, wobei der Zünder sich radial aus dem Gasgenerator herauserstreckt und an der Halteplatte befestigt ist, und wobei ein Gassack vorgesehen ist, der zwischen der Halteplatte und dem Gasgenerator eingeklemmt ist.

Dokument DE 9013131 U1 offenbart ein Gassackmodul gemäß dem Oberbegriff des unabhängigen Anspruchs 1.

Zu diesem Zweck ist erfindungsgemäß ein Gassack-Modul mit einem allgemein zylindrischen Gasgenerator geschaffen, mindestens einem Zünder und einem Gehäuse, an dem der Gasgenerator befestigt ist, wobei der Zünder sich radial aus dem Gasgenerator herauserstreckt und am Gehäuse befestigt ist, wobei ein Gassack vorgesehen ist, der zwischen dem Gehäuse und dem Gasgenerator eingeklemmt ist, und wobei das Gehäuse einen trogförmigen Aufnahmeabschnitt für den Gasgenerator aufweist. Die Erfindung beruht auf dem Grundgedanken, zur Befestigung des Gasgenerators am Gehäuse den Zünder zu verwenden. Auf diese Weise ergibt sich zum einen ein einfacher Aufbau, da auf die ansonsten üblichen Befestigungsbleche etc. verzichtet werden kann; zur Befestigung des Gasgenerators im Gehäuse wird ein ohnehin vorhandenes Bauteil verwendet.

Dieses braucht nur mit geringem Aufwand so ausgestaltet zu werden, daß es zur Befestigung geeignet ist. Zum anderen ergeben sich sehr geringe Leckage-Verluste, da der Zünder unmittelbar von außerhalb des Gehäuses angeschlossen werden kann; es sind keine Durchlässe für Kabel etc. erforderlich, die im Stand der Technik für einen vollständig innerhalb des Gehäuses angeordneten Zünder notwendig waren. Ein weiterer Vorteil besteht darin, daß der Gasgenerator so in das Modul integriert werden kann, daß die Strukturfestigkeit des Gasgenerators ein relevanter Bestandteil der mechanischen Bauteilfestigkeit des gesamten Gassack-Moduls wird. Schließlich kann, da der Gassack direkt vom Gasgenerator am Gehäuse festgespannt wird, auf die ansonsten üblichen Einlegeteile verzichtet werden, die zur Befestigung des Gassacks am Gehäuse verwendet werden. Es ergibt sich also ein besonders einfacher Aufbau mit einer geringen Anzahl von Bauteilen.

Zur Befestigung des Zünders am Gehäuse kann der Zünder mit einer Halte-Geometrie versehen sein, mittels der er am Gehäuse arretiert ist, so daß der Gasgenerator fest mit dem Gehäuse verbunden ist. Als Halte-Geometrie kann insbesondere ein Außengewinde verwendet werden, auf das eine Mutter aufgeschraubt wird, die außerhalb des Gehäuses liegt und auf diese Weise den Gasgenerator fest mit dem Gehäuse verbindet. Es ist auch möglich, daß als Halte-Geometrie eine Nut verwendet wird, in die ein Haltering eingesetzt wird.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine perspektivische Explosionsansicht eines Gassack-Moduls, das allgemein zur Erläuterung dient;
- Figur 2 eine perspektivische Unteransicht des montierten Gassack-Moduls von Figur 1;
- Figur 3 eine Schnittansicht durch das Gassack-Modul von Figur 1;
- Figur 4 in einem schematischen Schnitt ein erfindungsgemäßes Gassack-Modul gemäß einer ersten Variante; und
- Figur 5 in einem schematischen Schnitt ein erfindungsgemäßes Gassack-Modul gemäß einer zweiten Variante.

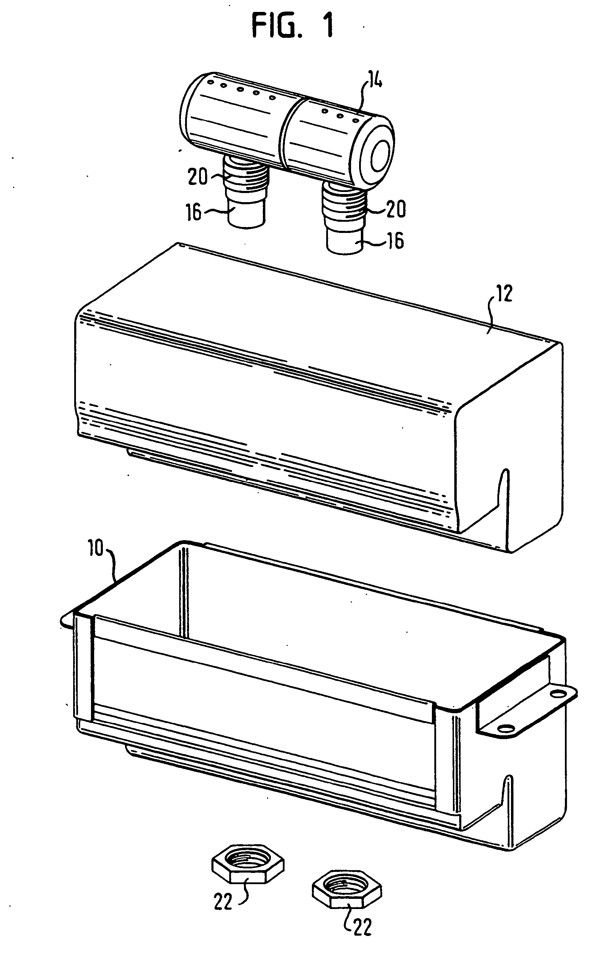

In den Figuren 1 bis 3 ist ein Gassack-Modul gezeigt, das ein Gehäuse 10 aufweist. Das Gehäuse 10 dient zur Aufnahme eines gefalteten Gassacks 12 sowie eines Gasgenerators 14. Der Gasgenerator, der hier als zylindrischer Rohrgasgenerator ausgeführt ist, kann nach Aktivierung ein Druckgas bereitstellen, mittels dem der Gassack 12 in an sich bekannter Weise entfaltet werden kann. Das Gehäuse 10 kann aus Blech bestehen und dient zum einen als Aufnahme für die übrigen Bauteile des Gassack-Moduls und ermöglicht zum anderen die Befestigung des Gassack-Moduls in einem Fahrzeug.

Der Gasgenerator 14 ist mit zwei Zündern 16 versehen, die bezüglich der Mittelachse des Gasgenerators 14 radial angeordnet sind. Jeder der Zünder ist einer eigenen gaserzeugenden Ladung zugeordnet; beim Gasgenerator handelt es sich um einen 2-stufigen Gasgenerator. Es kann aber auch ein Gasgenerator mit mehr als 2 Stufen verwendet werden.

Das Gehäuse 10 ist mit zwei Öffnungen 18 versehen, durch die sich die außerhalb des Gasgenerators 14 befindenden Abschnitte der Zünder 16 aus dem Gehäuse herauserstrecken. Diese außerhalb des Gehäuses liegenden Abschnitte der Zünder 16 sind jeweils mit einer Halte-Geometrie 18 versehen, die bei der in den Figuren 1 bis 3 gezeigten Ausführungsform ein Außengewinde ist. Auf das Außengewinde kann jeweils eine Mutter 22 aufgeschraubt werden.

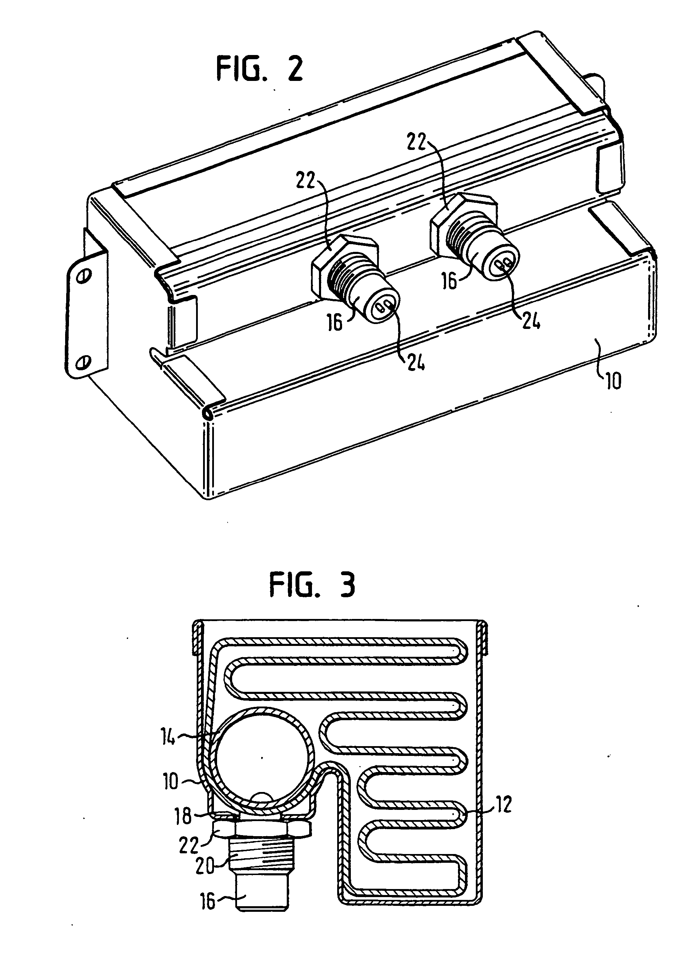

Wie in Figur 3 zu sehen ist, ist der Gasgenerator 14 im Inneren des Gassacks 12 angeordnet. Der Gassack 12 wird, wenn der Gasgenerator im Gehäuse 10 angeordnet ist und die Muttern 22 festgezogen werden, zwischen dem Gasgenerator 14 und dem Gehäuse 10 eingeklemmt, so daß er dort fest fixiert ist.

Wie in Figur 2 zu sehen ist, sind die Zünder 16 auf ihrem vom Gasgenerator 14 abgewandten, freien Ende mit jeweils einem Steckanschluß 24 versehen, über die die beiden Gasgeneratoren an eine Zündeinrichtung angeschlossen werden können. Es ist zu erkennen, daß kein separater Durchgang für eine Leitung oder ähnliches in das Innere des Gassack-Moduls erforderlich ist. Auf diese Weise ergibt sich eine besonders hohe Gasdichtigkeit.

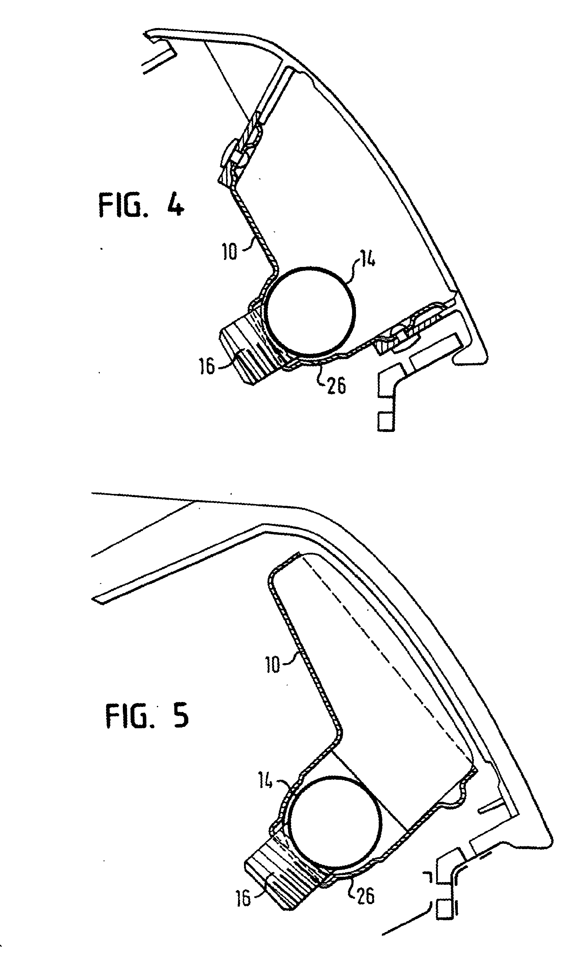

In Figur 4 ist schematisch ein Gassack-Modul gemäß einer ersten Variante der Erfindung gezeigt. Das Gehäuse 10 ist hier mit einem trogförmigen Aufnahmeabschnitt 26 für den Gasgenerator 14 ausgeführt. Da sich der Gasgenerator 14 großflächig an der Innenseite des Gehäuses 10 abstützen kann, trägt der Gasgenerator entscheidend zur Strukturfestigkeit des gesamten Gehäuses 10 bei.

In Figur 5 ist eine zweite Variante der Erfindung gezeigt. Der Unterschied zur ersten Variante besteht darin, daß der trogförmige Aufnahmeabschnitt 26 tiefer ausgeführt ist.

## Patentansprüche

1. Gassack-Modul mit einem allgemein zylindrischen Gasgenerator (14), mindestens einem Zünder (16) und einem Gehäuse (10), an dem der Gasgenerator (14) befestigt ist, wobei der Zünder (16) sich radial aus dem Gasgenerator (14) herauserstreckt und am Gehäuse (10) befestigt ist, wobei ein Gassack (12) vorgesehen ist, **dadurch gekennzeichnet, dass** der Gassak zwischen dem Gehause (10) und dem Gasgenerator (14) eingeklemmt ist, und wobei das Gehäuse (10) einen trogförmigen Aufnahmeabschnitt (26) für den Gasgenerator (14) aufweist.

2. Gassack-Modul nach Anspruch 1, **dadurch gekennzeichnet, daß** der Zünder (16) sich durch eine Öffnung (18) im Gehäuse (10) aus diesem herauserstreckt.

3. Gassack-Modul nach einem der Ansprüche 1 und 2, **dadurch gekennzeichnet, daß** der Zünder (16) mit einer Halte-Geometrie (20) versehen ist, mittels der er am Gehäuse (10) arretiert ist, so daß der Gasgenerator fest mit dem Gehäuse verbunden ist.

4. Gassack-Modul nach Anspruch 3, **dadurch gekennzeichnet, daß** die Halte-Geometrie (20) ein Außengewinde ist, auf das eine Mutter aufgeschraubt ist, so daß der Gasgenerator fest mit dem Gehäuse verschraubt ist.

5. Gassack-Modul nach Anspruch 3, **dadurch gekennzeichnet, daß** die Halte-Geometrie (20) eine Nut ist, in die ein Haltering eingesetzt ist, so daß der Gasgenerator fest mit dem Gehäuse verbunden ist.

6. Gassack-Modul nach einem der vorhergehenden Ansprüche, **dadurch gekennzeichnet, daß** der Gasgenerator (14) im Inneren des Gassacks (12) angeordnet ist.

## Claims

1. A gas bag module comprising a generally cylindrical gas generator (14), at least one igniter (16), and a housing (10) to which the gas generator (14) is secured, the igniter (16) extending radially out of the gas generator (14) and being secured to the housing (10), a gas bag (12) being provided, **characterized in that** the gas bag is clamped between the housing (10) and the gas generator (14), and the housing (10) having a trough-shaped receiving section (26) for the gas generator (14).

2. The gas bag module according to claim 1, **characterized in that** the igniter (16) extends out of the housing (10) through an opening (18) in the housing.

3. The gas bag module according to either one of claims 1 and 2, **characterized in that** the igniter (16) is provided with a holding geometry (20) by means of which it is arrested at the housing (10) so that the gas generator is firmly connected to the housing.

4. The gas bag module according to claim 3, **characterized in that** the holding geometry (20) is a male thread onto which a nut is screwed so that the gas generator is firmly screwed to the housing.

5. The gas bag module according to claim 3, **characterized in that** the holding geometry (20) is a groove in which a holding ring is inserted so that the gas generator is firmly connected to the housing.

6. The gas bag module according to any of the preceding claims, **characterized in that** the gas generator (14) is arranged in the interior of the gas bag (12).

## Revendications

1. Module de coussin à gaz comportant un générateur de gaz (14) en général cylindrique, au moins une amorce (16) et un boîtier (10) sur lequel le générateur de gaz (14) est fixé, l'amorce (16) s'étendant radialement hors du générateur de gaz (14) et étant fixée sur le boîtier (10), module dans lequel est prévu un coussin à gaz (12), **caractérisé en ce que** le coussin à gaz est serré entre le boîtier (10) et le générateur de gaz (14) et le boîtier (10) présentant un tronçon de réception (26) en forme de cuve pour le générateur de gaz (14).

2. Module de coussin à gaz selon la revendication 1, **caractérisé en ce que** l'amorce (16) s'étend hors du boîtier (10) à travers une ouverture (18) ménagée dans celui-ci.

3. Module de coussin à gaz selon l'une des revendications 1 et 2, **caractérisé en ce que** l'amorce (16) est pourvue d'une géométrie de retenue (20) au moyen de laquelle elle est arrêtée sur le boîtier (10), de telle sorte que le générateur de gaz est relié de manière solidaire au boîtier.

4. Module de coussin à gaz selon la revendication 3, **caractérisé en ce que** la géométrie de retenue (20) est un filetage sur lequel est vissé un écrou, de telle sorte que le générateur de gaz est vissé de manière solidaire au boîtier.

5. Module de coussin à gaz selon la revendication 3, **caractérisé en ce que** la géométrie de retenue (20) est une gorge dans laquelle est insérée une bague de retenue, de telle sorte que le générateur de gaz est relié de manière solidaire au boîtier.

6. Module de coussin à gaz selon l'une des revendications précédentes, **caractérisé en ce que** le générateur de gaz (14) d'un seul tenant agencé à l'intérieur du coussin à gaz (12).
